(19) Europäisches Patentamt
European Patent Office
Office européen des brevets

(11) **EP 1 893 977 B1**

(12) **EUROPÄISCHE PATENTSCHRIFT**

(45) Veröffentlichungstag und Bekanntmachung des Hinweises auf die Patenterteilung:
**01.10.2008 Patentblatt 2008/40**

(21) Anmeldenummer: **06706002.0**

(22) Anmeldetag: **20.02.2006**

(51) Int Cl.:
*G01N 21/21* (2006.01)   *G01J 3/453* (2006.01)

(86) Internationale Anmeldenummer:
**PCT/DE2006/000325**

(87) Internationale Veröffentlichungsnummer:
**WO 2006/136124 (28.12.2006 Gazette 2006/52)**

(54) **SPEKTRALES RETARDERFREIES INFRAROT-ELLIPSOMETER MIT EINEM AZIMUT ZWISCHEN DEN EINFALLSEBENEN DER INFRAROTSTRAHLEN**

RETARDER-FREE INFRARED SPECTROSCOPIC ELLIPSOMETER WITH AN AZIMUTH BETWEEN THE PLANES OF INCIDENCE OF THE INFRARED RAYS

ELLIPSOMETRE SPECTROSCOPIQUE INFRAROUGE SANS RETARDATEUR AVEC UN ANGLE AZIMUTAL ENTRE LES PLANS D'INCIDENCE DES RAYONS INFRAROUGES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **19.06.2005 DE 102005028894**

(43) Veröffentlichungstag der Anmeldung:
**05.03.2008 Patentblatt 2008/10**

(73) Patentinhaber: **Berliner Elektronenspeicherring-Gesellschaft für Synchrotronstrahlung mbH**
**12489 Berlin (DE)**

(72) Erfinder:
• **RÖSELER, Arnulf**
  **16835 Lindow (DE)**
• **SCHADE, Ulrich**
  **12625 Waldesruh (DE)**

(74) Vertreter: **Rudolph, Margit**
**Helmholtz-Zentrum Berlin für Materialien und Energie GmbH**
**KGF-PATENTE**
**Glienicker Strasse 100**
**14109 Berlin (DE)**

(56) Entgegenhaltungen:
DD-A1- 157 219          DE-A1- 10 319 843
US-A- 5 485 271

• DIGNAM M J; BAKER M D: "ANALYSIS OF A POLARIZING MICHELSON INTERFEROMETER FOR DUAL BEAM FOURIER TRANSFORM INFRARED, CIRCULAR DICHROISM INFRARED, AND REFLECTANCE ELLIPSOMETRIC INFRARED SPECTROSCOPIES" APPLIED SPECTROSCOPY, Bd. 35, Nr. 2, März 1981 (1981-03), Seiten 186-193, XP009067286 in der Anmeldung erwähnt
• DITTMAR G ET AL: "EXTENSION OF SPECTROSCOPIC ELLIPSOMETRY TO THE FAR INFRARED" THIN SOLID FILMS, ELSEVIER-SEQUOIA S.A. LAUSANNE, CH, Bd. 234, Nr. 1/2, 25. Oktober 1993 (1993-10-25), Seiten 346-351, XP000397454 ISSN: 0040-6090

**Beschreibung**

Die Erfindung bezieht sich auf ein spektrales retarderfreies Infrarot-Ellipsometer zur Bestimmung der optischen Parameter einer Materialprobe im Infrarotbereich mit einer Strahlungsquelle, einem Detektor und einer Auswerteeinheit sowie mit einer polarisierenden Interferometeranordnung aus einem polarisierenden Strahlteiler und einem ortsfesten und einem ortsveränderlichen Spiegel vor der Materialprobe, wobei die Interferometeranordnung einen Wechselausgang mit einer Weiterleitung der Infrarotstrahlen und einen Gleichausgang mit einer Rücklenkung der Infrarotstrahlen zur Strahlungsquelle aufweist, und einer Ellipsometeranordnung mit einem linearen Polarisator vor der Materialprobe und einem analysierenden Polarisator hinter der Materialprobe, wobei vom einfallenden und reflektierten Infrarotstrahl am polarisierenden Strahlteiler eine erste Einfallsebene und an der Materialprobe eine zweite Einfallsebene definiert sind.

Infrarot ist der Spektralbereich, dessen Photonenenergien den intermolekularen (Fernes Infrarot, FIR: Wellenlängen von ca. 30 $\mu$m bis in den mm-Bereich) und den intramolekularen (Mittleres und Nahes Infrarot, MIR und NIR: Wellenlängen von ca. 3 $\mu$m bis 30 $\mu$m bzw. vom sichtbaren Licht, ca. 800 nm bis ca. 3 $\mu$m) Wechselwirkungen entsprechen. In jüngster Zeit wird insbesondere der Terahertzstrahlung (FIR, Terastrahlen) besondere Aufmerksamkeit zugemessen. Insgesamt gilt aber für die Infrarotstrahlung allgemein auch, was im Folgenden beispielhaft für die Terahertzstrahlung im Speziellen ausgeführt wird. Optische Konstanten sind im Terahertzbereich des Lichts sind bislang nur von wenigen Materialien hinreichend gut bekannt. Terahertzstrahlung tritt am niederenergetischen Ende des Lichtspektrums auf und kann stabil mit einer Synchrotronquelle durch beschleunigte Elektronenpakete nahe der Lichtgeschwindigkeit erzeugt werden. Terahertzstrahlung durchdringt die Materie und kann vielfältig angewendet werden, vom Objektscannen an Flughäfen bis hin zu biologischen Darstellungen und Studien an Halbleitern und Hochtemperatursupraleitern. An großtechnischen Speicherringen (BESSY, ANKA) kann Infrarotstrahlung hoher Intensität für die Spektroskopie, Mikroskopie und Ellipsometrie bereitgestellt werden. Mittels Infarotspektroskopie können die molekularen Baugruppen komplexer Verbindungen anhand ihrer Schwingungsabsorptionsspektren identifiziert werden. Die Ellipsometrie mit Infrarotstrahlung erlaubt es, die komplexe Dielektrizitätsfunktion einer Materialprobe zu bestimmen. Diese Methode ist auch besonders empfindlich hinsichtlich der optischen Eigenschaften von dünnen Filmen. Im Gegensatz zu anderen Arten von Reflexionsmessungen sind bei der Ellipsometrie weder Referenzmessungen noch Datenextrapolationen zu hohen und tiefen Photonenenergien nötig.

**Stand der Technik**

Zur prinzipiellen Messmethode der Ellipsometrie wird beispielsweise auf die **Veröffentlichung I** "Ellipsometrie" der RWTH Aachen, Fachgruppe Physik hingewiesen (abrufbar im Internet unter der Webadresse http://ia.physik.rwth-aachen.de/methods/ellipsometry/elli.htm, Stand 12.06.2005). Die grundsätzliche Messmethode der Infrarotspektroskopie ist beispielsweise aus der **Veröffentlichung II** "Prinzip der FTIR-Spektroskopie" bekannt (abrufbar im Internet unter der Webadresse http://www.ir-spektroskopie.de/spec/ftir-prinzip/, Stand 12.06.2005).

Zur Ermittlung optischer Eigenschaften von Materialien und dünner Filme ist es beispielsweise aus den **NACHRICHTEN -** Forschungszentrum Karlsruhe, Jahrg. 32, 4/2000, S. 308-332, für Messplätze an der Synchrotronstrahlungsquelle ANKA bekannt, ein Michelson-Interferometer mit einem Strahlteiler aus Polyethylen-Folie (Handelsname: Mylar) und in Reihe dahinter ein Ellipsometer einzusetzen. Der Einsatz eines Mylar-Strahlteilers bedingt jedoch in nachteiliger Weise Interferenzen, anisotrope Effekte und einen geringen nutzbaren Frequenzbereich. Somit wird ein Interferometer mit einem Strahlteiler mit einem photometrischen Ellipsometer gekoppelt, das zunächst das Amplitudenverhältnis tg $\Psi$ und den Cosinus der Phasendifferenz $\Delta$ nach der Reflexion an der Materialprobe ermittelt. Zur eindeutigen Bestimmung der Phasendifferenz $\Delta$ muss jedoch auch der Sinus der Phasendifferenz $\Delta$ durch eine zusätzliche Messung mit einem Retarder ermittelt werden. An die optische Qualität der als Retarder verwendeten Prismen werden jedoch hohe Ansprüche gestellt, die auch schon im mittleren Infrarotbereich nicht realisiert werden können und daher stets ein Problem darstellen.

Die bauliche Vereinigung eines Interferometers und eines Ellipsometers führt zu einem spektralen Ellipsometer. Ein spektrales Infrarot-Ellipsometer wird beispielsweise von der Firma Lot-Oriel unter dem Namen "IR-VASE" mit einem Polymerfolienstrahlteiler und einem Autoretarder am Markt angeboten (vergleiche **Prospektblätter I und II**, abrufbar im Internet unter http://www.lot-oriel.com/de/htm/all/obe01 c.php und http://www.lot-oriel.com/de/htm/spec/s09704.php, beide Stand 11.06.2005). Das bekannte Infrarot-Spektralellipsometer weist einen kontinuierlich einstellbaren Einfallswinkelbereich des Infrarotstrahls (umgangssprachlich oft auch mit "Lichtstrahl" bezeichnet, obwohl "Licht" prinzipiell nur für den sichtbaren Spektralbereich verwendet wird) in die Materialprobe von 30˚ bis 90˚ auf. Aus der **Veröffentlichung III** "VASE Messungen an dünnen beschichteten Mylarfolien" (Firma Lot-Oriel, abrufbar im Internet unter der Webadresse www.lot-oriel.com/pdf/a_obe01/ mylarfolien.pdf, Stand 11.06.2005) ist es weiterhin bekannt, die Mylarfolie auf anisotrope Effekte hin zu untersuchen. Es wurden zur Ermittlung der Parameter jeweils mehrere Messungen an den Mylarfolien und auch separate Transmissionsmessungen durchgeführt und diese Spektren mit den ellipsometrischen Daten gemeinsam gefittet. Bei einer Drehung der Materialprobe um 45˚ gegenüber der Einfallsebene wurde die Methode der "generalisierten" Ellipsometrie" angewandt. Dabei wird für jeden Messpunkt bei unterschiedlichen Polarisatorstellungen des Ellipsometers gemessen. Da bei dieser Probenausrichtung die s-Komponente (senkrecht) und die p-Komponente (parallel) des E-Feldvektors des einstrahlenden Lichts gemischt werden, ist das gemessene Ergebnis nicht mehr unabhängig vom Polarisationsazimut. Bei isotropen Materialproben sind die Nebenelemente der Jones-Matrix Null, bei anisotropen Materialproben nicht. Neben den Diagonalelementen $\psi_{ss}$ werden die Nebenelemente $\psi_{sp}$, $\psi_{ps}$ bestimmt. Diese beinhalten die Information bezüglich des Brechzahlunterschieds der einzelnen Achsen, während die Diagonalelemente die Information der absoluten Brechzahl enthalten und den isotropen ellipsometrischen Größen entsprechen. Gemessen wurde bei Einfallswinkeln von 20˚ und 70˚. Da die Werte der Phasendifferenz $\Delta$ jedoch häufig im Bereich von 0˚ liegen, ist der Autoretarder zwingend notwendig, der zusätzliche Messungen bedingt.

Die Nachteile bei der Verwendung eines Retarders im Infrarotbereich und auch die Nachteile eines Mylar-Strahlteilers können durch die Verwendung eines polarisierenden Strahlteilers im Interferometer vermieden werden, da hier derartige Komponenten entfallen. Eine retarderfreie Anordnung ist beispielsweise aus der **Veröffentlichung IV** "Analysis of a Polarizing Michelson Interferometer for Dual Beam Fourier Infrared, Circular Dichroism Infrared, and Reflectance Ellipsometric Infrared Spectroscopies" von M.J. Dignam und M.D. Baker (Appl. Spectroscopy, Vol. 35, No. 2, 1981, pp186-193) bekannt, von der die vorliegende Erfindung als nächstliegendem Stand der Technik ausgeht. In dieser Veröffentlichung wird die Kombination eines polarisierenden Martin-Puplett-Interferometers (MPI) mit einem Ellipsometer beschrieben. Hierbei handelt es sich dementsprechend um eine gattungsgemäße Vorrichtung der eingangs beschriebenen Art mit einer Strahlungsquelle, einem Detektor und einer Auswerteeinheit als Basiskomponenten. Für die Messtechnik sind zwei Anordnungen vorhanden: eine polarisierende Interferometeranordnung aus einem polarisierenden Strahlteiler und einem ortsfesten und einem ortsveränderlichen Spiegel vor der Materialprobe und eine Ellipsometeranordnung mit einem linearen Polarisator vor und einem analysierenden Polarisator hinter der Materialprobe. Dabei weist die Interferometeranordnung einen Wechselausgang, von dem aus die polarisierten Infrarotstrahlen in Richtung auf die Materialprobe weitergeleitet werden, und einen Gleichausgang auf, von dem aus die Infrarotstrahlen zur Strahlungsquelle rückgelenkt werden. Geometrisch definiert wird die Vorrichtung durch eine erste Einfallsebene am polarisierenden Strahlteiler und eine zweite Einfallsebene an der Materialprobe. Dabei definiert sich die Einfallsebene immer als die vom einfallenden und vom reflektierten Infrarotstrahl aufgespannte Ebene.

Die Besonderheit der MPI besteht in einem polarisierenden Strahlteiler in Verbindung mit zwei Spiegeln, von denen der eine verstellbar angeordnet ist. Bei den Spiegeln kann es sich um einfache Planspiegel, aber auch um so genannte "Dachkantspiegel" handeln, die zwei einander orthogonal gegenüber liegende Spiegelflächen aufweisen. Damit kann bei geeigneter Orientierung des Strahlteilers die gesamte von der Strahlungsquelle kommende Strahlungsenergie zum der Strahlungsquelle entgegen gesetzten Ausgang (W-Ausgang, Wechsel-Ausgang) geleitet werden. Eine in Richtung des Lichteinfalls vorgesehene parallele Verschiebbarkeit eines Spiegels dient der Erzeugung einer Phasenverschiebung bzw. eines Gangunterschiedes zwischen den beiden Teilstrahlen. Die Vektoren des elektrischen Feldes der beiden im MPI erzeugten Teilstrahlen stehen jedoch orthogonal zueinander und werden erst durch einen weiteren Polarisator zur Interferenz befähigt.

Bei der aus der **Veröffentlichung IV** bekannten Vorrichtung, deren Realisierung beispielsweise der **Veröffentlichung V**: "The DA3 at Work" (Application note number DA3 - 8701, Fa. BOMEM, Kanada 05-87) zu entnehmen ist, wird jedoch ein weiterer Polarisator zwischen der Strahlungsquelle und dem polarisierenden Strahlteiler verwendet. Die Transmissionsrichtung des Strahlteilers bezüglich seiner Einfallsebene beträgt darüber hinaus 0˚ oder 90˚. Weiterhin ist in der Ellipsometeranordnung der analysierende Polarisator bei 45˚ fixiert und die Polarisationsrichtung der einfallenden Strahlung wird durch einen aufwändigen Rotator, bestehend aus vier Spiegeln, geändert. Schließlich verlaufen die MPI- und die Ellipsometerebene parallel zueinander. Durch die gewählte Geometrie ist aber wiederum nur die die direkte Messung des Cosinus der Phasendifferenz $\Delta$ aus dem Interferogramm möglich. Der Sinus der Phasendifferenz $\Delta$ müsste weiterhin durch zusätzliche Messungen ermittelt werden, welche jedoch dort nicht vorgesehen sind.

**Aufgabenstellung und Lösung**

Die **Aufgabe** für die vorliegende Erfindung ist daher darin zu sehen, ein spektrales retarderfreies Infrarot-Ellipsometer zur Bestimmung der optischen Parameter einer Materialprobe im Infrarotbereich der gattungsgemäßen Art zur Verfügung zu stellen, das unter Beibehaltung der Vorteile durch die Verwendung eines polarisierenden Strahlteilers im Interferometer hochgenau und ohne zusätzliche Messungen die Bestimmung der optischen Parameter zulässt. Trotz der zu erreichenden Schnelligkeit und Genauigkeit soll die erfindungsgemäße Vorrichtung einfach und zuverlässig in der Handhabung bei einer vielseitigen Einsatzmöglichkeit mit einem breiten Spektrum der zu ermittelnden Parameter sein. Die erfindungsgemäße Lösung für diese Aufgabe ist dem Hauptanspruch zu entnehmen. Eine vorteilhafte Weiterbildung der Erfindung ist dem Unteranspruch zu entnehmen, der im Folgenden im Zusammenhang mit der Erfindung näher erläutert wird.

Das erfindungsgemäße spektrale retarderfreie Infrarot-Ellipsometer ist unter anderem erfindungswesentlich **dadurch gekennzeichnet, dass** der polarisierende Strahlteiler in der Interferometeranordnung gleichzeitig als linearer Polarisator in der Ellipsometeranordnung ausgebildet ist. Dadurch entfällt bei dem erfindungsgemäßen spektralen Infrarot-Ellipsometer ein weiterer Polarisator zwischen Interferometer und der Materialprobe, wodurch der Geräteaufbau vereinfacht und kostengünstiger wird und die Handhabung, insbesondere im Hinblick auf die Einstellung des Infrarot-Ellipsometers, vereinfacht wird. Es ergibt sich ein Intensitätsvorteil um den Faktor vier an der Materialprobe im Vergleich zur herkömmlichen Variante mit einem amplitudenteilenden Strahlteiler.

Die Infrarotstrahlen werden bei der Reflexion an der Materialoberfläche, die damit als Reflexionsanordnung wirkt, parallel und senkrecht zur Einfallsebene mit unterschiedlicher Amplitude (Wurzel aus der Intensität) und Phase reflektiert. Das Verhältnis der Amplituden wird durch tg $\Psi$ und die Differenz der Phasen durch $\Delta$ dargestellt. Die polarisationsoptische Berechnung der Anordnung ergibt Folgendes: das bisher übliche Azimut von 45˚oder ein Vielfaches davon lässt nur die Messung von tg $\Psi$ und sin $\Delta$ zu. Für die Messung von cos $\Delta$ ist jedoch zwingend ein von 45˚ oder einem Vielfachen davon verschiedener Winkel erforderlich. Deshalb sind bei dem erfindungsgemäßen Infrarot-Ellipsometer die beiden Einfallsebenen unter einem Azimut $\alpha$ in einem Bereich von 22,5˚ als optimalen Winkel oder des (2n+1) fachen davon mit n= 1, 2, 3... zueinander angeordnet. Geringfügige Abweichungen vom Azimut $\alpha$ im Gradbereich erbringen dabei auch akzeptable Ergebnisse. Dabei wird mit dem Azimut der Winkel zwischen der optischen Achse von Strahlungsquelle und polarisierendem Strahlteiler und der vom einfallenden und reflektierten Strahl an der Materialprobe aufgespannten Ebene bezeichnet. Dies ist gleichbedeutend damit, dass die Senkrechte auf die Materialprobe in der Ellipsometeranordnung einen Winkel mit der optischen Achse der in das Interferometer einfallenden Strahlung bildet. Die Polarisationsebene an der Materialprobe wird damit um das Azimut gedreht. Durch diese erfindungswesentliche Ausrichtung des Azimuts (ungerade Vielfache von ca. 22,5˚, keine Einstellung der Winkel 0˚ und 45˚ bzw. Vielfache davon) oder entsprechende Neigung der Materialprobe bzw. der Ellipsometeranordnung gegenüber der Interferometeranordnung (konstruktive Neigung der Geräteebene), können der Sinus der Phasendifferenz $\Delta$ und der Cosinus der Phasendifferenz $\Delta$ ohne Retarder in einem Messvorgang unabhängig voneinander bestimmt werden. Es entfallen die Probleme bei der Realisierung des Retarders und die hohen Reflexionsverluste an dieser optischen Komponente. Die Phasendifferenz $\Delta$ wird im Vollwinkelbereich von 0˚ ... 360˚ eindeutig festgelegt und es können die optischen Parameter in der Auswerteeinheit aus der Cosinus- und Sinus-Transformierten des mit der Interferometeranordnung erstellten Interferogramms direkt ermittelt werden. Die Winkelfunktionen Sinus und Cosinus sind jeweils nur in einem Bereich von 180˚ eindeutig. Cosinus ist in der Umgebung von 0˚ und 180˚ und Sinus in der Umgebung von 90˚ und 270˚ für eine Messung untauglich. Eine eindeutige und genaue Messung der Phasendifferenz $\Delta$ im Vollwinkelbereich von 0˚ ... 360˚ erfordert daher die Messung von cos $\Delta$ und sin $\Delta$. Dies erfolgt mit dem erfindungsgemäßen spektralen Infrarot-Ellipsometer ohne zusätzlichen Aufwand, insbesondere auch ohne Retarder, in einer gemeinsamen Messung. Im Stand der Technik dagegen wird die Messung von cos $\Delta$ und sin $\Delta$ nur durch eine zusätzliche Messung mit einem Retarder erreicht, der der bekannten Phasenverschiebung eine zusätzliche Phasenverschiebung in der Nähe von 90˚ in den Strahlengang hinzufügt. Dadurch sind zwei Messungen mit und ohne Retarder erforderlich. Realisiert wird der bekannte Retarder durch ein transparentes Prisma in Totalreflexion, an dessen optische Qualitäten aber insbesondere im Infrarotbereich kaum zu erfüllende Anforderungen gestellt werden. Bei dem spektralen Infrarot-Ellipsometer nach der Erfindung hingegen wird die Phasenänderung in der Interferometeranordnung durch den Spiegelhub realisiert, der somit den Retarder ersetzt.

Durch die fest vorgegebene Winkelorientierung des polarisierenden Strahlteilers zur Einfallsebene an der Materialprobe können die ellipsometrischen Größen des Amplitudenverhältnisses $\psi$ und der Phasendifferenz $\Delta$ als Spektren gemessen werden. Dabei kann die Einstellung des Azimuts auf zwei verschiedenen Wegen ereicht werden. Zum einen können die Geräteebenen von Interferometer- und Ellipsometeranordnung bzw. die entsprechenden Einfallsebenen um das Azimut zueinander gekippt werden. Vorteilhaft ist dabei, dass das Azimut am Interferometer dann 45˚ beträgt. Dadurch wird die gesamte Intensität der Infrarotstrahlen auf den Wechsel-Ausgang des Interferometers gelenkt und es entsteht kein Intensitätsverlust beim Lichteinfall in die Materialprobe. Die gesamte Strahlungsenergie der Strahlungsquelle kann zur ellipsometrischen Messung verwendet werden. Andererseits können aber auch die Geräte- bzw. Einfallsebenen keinen Winkel zueinander haben, wohingegen das Azimut dann am polarisierenden Strahlteiler in der Interferometeranordnung eingestellt wird. Hierdurch entsteht jedoch ein Intensitätsverlust, da das Interferometer einen Teil der Strahlung auf die Strahlungsquelle (Gleich-Ausgang) zurückleitet. Bei einem Azimut von 22,5˚ wird die Intensität hälftig auf beide Ausgänge verteilt, sodass die Intensität am W-Ausgang nur noch 50% beträgt, wie es beim Michelson-Interferometer der Fall ist.

Bei dem erfindungsgemäßen spektralen Infrarot-Ellipsometer ist das Azimut am Interferometer bevorzugt auf 45˚ eingestellt. Dabei sind die Spiegel in der Interferometeranordnung als Dachkantspiegel mit einer geraden Anzahl von Reflexionen ausgebildet. Die Materialprobe, der analysierende Polarisator und der Detektor sind hinter dem Wechselausgang der Interferometeranordnung angeordnet. Durch die Drehung der Polarisationsebene um 90˚ an den Dachkantspiegeln aufgrund der geraden Anzahl von Reflexionen wird die gesamte Strahlungsintensität am polarisierenden Strahlteiler in die Interferometeranordnung reflektiert.

Weiterhin kann vorteilhaft der analysierende Polarisator ortsfest unter 45˚ oder einem ungeraden Vielfachen davon zum einfallenden Infrarotstrahl angeordnet sein. Er wird dann sowohl in der Transmissionsrichtung als auch in

EP 1 893 977 B1

der Reflexionsrichtung der Materialprobe zur Messung eingesetzt und muss nicht mehr verstellt werden. Dabei muss sowohl für den transmittierten als auch für den reflektierten Anteil des Infrarotstrahls jeweils ein Detektor vorgesehen sein. Weitere Erläuterungen zu dieser Ausführungsform des erfindungsgemäßen spektralen Infrarot-Ellipsometers sind dem nachfolgenden speziellen Beschreibungsteil zu entnehmen.

**Ausführungsbeispiel**

Ausbildungsformen des spektralen retarderfreien Infrarot-Ellipsometers nach der Erfindung unter speziellem Bezug auf Terahertzstrahlen werden nachfolgend anhand der schematischen Figuren näher erläutert. Es gelten aber die weiter oben bereits gemachten Verallgemeinerungen auf den gesamten Infrarotstrahlungsbereich. Dabei zeigt:

**Figur 1**    den schematischen Aufbau des spektralen Infrarot-Ellipsometers,
**Figur 2**    mit dem Aufbau gemäß Figur 1 aufgenommene Interferogramme,
**Figur 3**    aus den Interferogrammen gemäß Figur 2 errechnete Spektren von sin/cos$\Delta$ und tg$\Psi$ und
**Figur 4**    die Spektren gemäß Figur 3 als Messpunkte und gefittete Spektren für eine Polymerfolie.

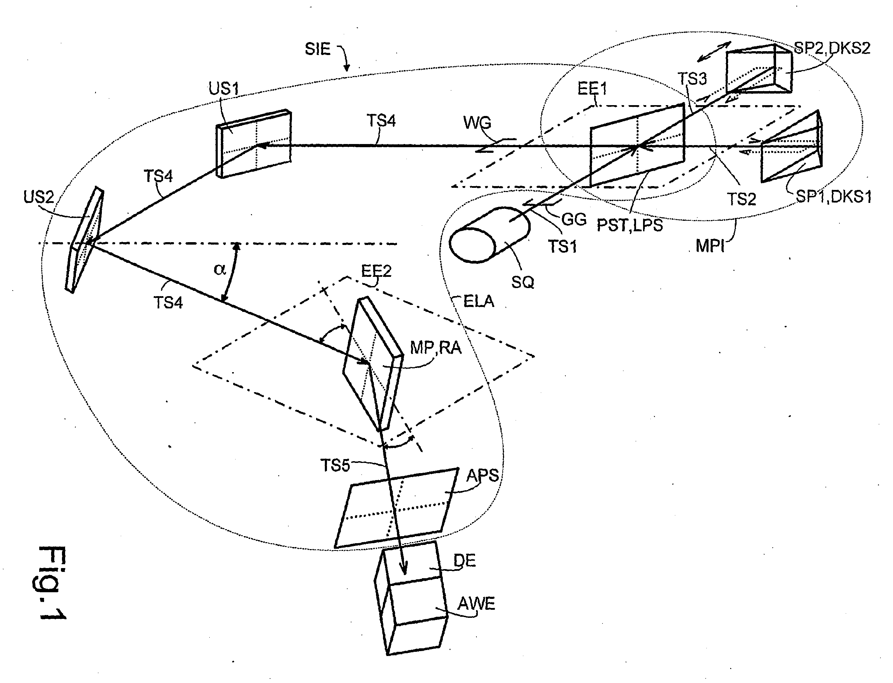

Die **Figur 1** zeigt schematisch ein spektrales Infrarot-Ellipsometer **SIE** zur Bestimmung der optischen Parameter einer Materialprobe **MP** im Infrarotbereich mit einer Strahlungsquelle **SQ** zur Aussendung von Terastrahlen **TS1** im Infrarotbereich (Infrarotstrahlen), einem Detektor **DE** und einer Auswerteeinheit **AWE.** Das spektrale Infrarot-Ellipsometer **SIE** umfasst zwei Anordnungen zur Durchführung physikalisch unterschiedlicher Messungen. Hierbei handelt es sich um eine polarisierende Interferometeranordnung **MPI** (Martin-Puplett-Interferometer) und um eine Ellipsometeranordnung **ELA.**

Die polarisierende Interferometeranordnung **MPI** umfasst einen polarisierenden Strahlteiler **PST** und zwei Spiegel **SP1, SP2.** Hierbei handelt es sich im gewählten Ausführungsbeispiel nicht um einfache Planspiegel, sondern um einen ortsfesten Dachkantspiegel **DKS1** und einen ortsveränderlichen Dachkantspiegel **DKS2.** Im gezeigten Ausführungsbeispiel bewirken beide Dachkantspiegel **DKS1, DKS2** eine gerade Anzahl von Reflexionen, sodass die Polarisationsebene der einfallenden Terastrahlen **TS** um 90˚ gedreht wird. Weiterhin verfügt die polarisierende Interferometeranordnung **MPI** über einen Wechselausgang **WG** mit einer Weiterleitung der Terastrahlen **TS4,** der der Strahlungsquelle **SQ** winklig gegenüberliegt, und über einen Gleichausgang **GG** mit einer Rücklenkung der Terastrahlen **TS1,** der in Richtung der Strahlungsquelle **SQ** liegt.

Zu der Ellipsometeranordnung **ELA** gehören die Materialprobe **MP** als Reflexionsanordnung **RA,** ein analysierender Polarisator **APS,** zwei optionale Umlenkspiegel **US1, US2** und ein linearer Polarisator **LPS,** der wiederum vom polarisierender Strahlteiler **PST** der Interferometeranordnung **MPI** gebildet wird. Dabei sind die Umlenkspiegel **US1, US2** durch die in **Figur 1** dargestellte Ausführungsform des spektralen Infrarot-Ellipsometers **SIE** bedingt, das im Strahlengang für den konkreten Aufbau aus Platzgründen zweimal gefaltet ist. Der polarisierende Strahlteiler **PST** gehört damit zu beiden Anordnungen **MPI, ELA** und bildet deren Schnittstelle. Mit dem analysierenden Polarisator **APS** werden beispielsweise vier um 45˚ verschiedene Stellungen abgefahren, um die Parameter der Polarisationsellipse des von der Materialprobe **MP** reflektierten Terastrahls **TS5** zu erhalten, aus denen dann das Amplitudenverhältnis tg $\Psi$ und die Phasendifferenz $\Delta$ berechnet werden. Es sind aber auch nur zwei Stellungen des analysierenden Polarisator **APS** (45˚ und 135˚) oder sogar nur eine ortsfeste Stellung des analysierenden Polarisators **APS** ($\pm$ 45˚ oder ungerade Vielfache davon) zum einfallenden Terastrahl **TS5** erforderlich, wenn der analysierende Polarisator **APS** sowohl in der Transmissionsrichtung als auch in der Reflexionsrichtung der Materialprobe **MP** zur Messung eingesetzt wird, wobei sowohl für den transmittierten als auch für den reflektierten Anteil des Terastrahls **TS5** jeweils ein Detektor **DE** vorgesehen ist (vergleiche auch weiter unten). Durch die Variation des Gangunterschiedes der beiden Terastrahlen **TS2, TS3** im überlagerten Terastrahl **TS4** in der Interferometeranordnung **MPI** über eine Bewegung des zweiten Dachkantspiegels **DKS2** in Richtung des durchgelassenen Terastrahls **TS1, TS3** (in der **Figur** angedeutet durch einen Doppelpfeil) wird ein Interferogramm erstellt, das die spektrale Ermittlung der optischen Konstanten im Infraroten ermöglicht.

In der Interferometeranordnung **MPI** wird eine erste Einfallsebene **EE1** definiert, die von dem einfallenden Terastrahl **TS1** und dem an dem polarisierenden Strahlteiler **PST** reflektierten Terastrahl **TS2** aufgespannt wird. Eine zweite Einfallsebene **EE2** wird an der reflektierenden Materialprobe **MP** in der Ellipsometeranordnung **ELA** definiert und hier analog von dem einfallenden Terastrahl **TS4** und dem reflektierten Terastrahl **TS5** aufgespannt. Die beiden Einfallsebenen **EE1, EE2** sind im gewählten Ausführungsbeispiel durch Einstellung des Umlenkspiegels **US2** in einem Bereich unter einem Azimut $\alpha$ ("Projektionswinkel") in einem Bereich von 22,5˚ als optimalem Winkel zueinander angeordnet. Andere Winkel mit dem (2n+1)fachen von 22,5˚ mit n= 1, 2, 3... und geringfügige Abweichungen davon sind ebenfalls einstellbar und erbringen auch gute Ergebnisse. Das Azimut $\alpha$ ist als Winkel zwischen der Einfallsebene **EE1** und der Einfallsebene **EE2** definiert und entspricht dem Winkel der Transmissionsrichtung des polarisierenden Strahlteilers **PST** bezüglich der Einfallsebene **EE2** an der Materialprobe **MP.** Durch die erfindungsgemäße Wahl des Azimuts $\alpha$ zwischen den beiden Einfallsebenen **EE1, EE2** können die ellipsometrischen Parameter in der Auswerteeinheit **AWE**

aus der Cosinus- und Sinus-Transformierten des mit der Interferometeranordnung **MPI** erstellten Interferogramms direkt ermittelt werden. Dabei erfolgen Messweise und Berechnung bei dem spektralen Infrarot-Ellipsometer **SIE** in folgender Weise.

Es gilt:

$$i(d) := \sin^2 2\alpha_{St} \int I(\tilde{v})\{(\cos^2 \beta R_p + \sin^2 \beta R_s) +$$

$$[(\cos^2 \beta R_p - \sin^2 \beta R_s)\sin 2\alpha - \sin 2\beta \sqrt{R_p R_s} \cos 2\alpha \cos \Delta]\cos 2\pi\tilde{v}d$$

$$+ [\sin 2\beta \sqrt{R_p R_s} \sin \Delta]\sin 2\pi\tilde{v}d\}d\tilde{v}$$

mit

| | |
|---|---|
| $I(\tilde{v})$ = | Intensitätsspektrum der Strahlungsquelle **SQ** |
| i(d)= | Interferogramm |
| $\tilde{v}$ = | Wellenzahl |
| d = | optischer Gangunterschied zwischen **TS2** und **TS3** in **TS4** |
| $R_{s,p}$ = | Reflexionskomponente an der Materialprobe **MP** senkrecht/parallel |
| $\alpha_{St}$ = | Azimut der Transmissionsrichtung des polarisierenden Strahlteilers **PST** bezüglich seiner Einfallsebene **EE1** |
| $\alpha$ = | Azimut zwischen der Einfallsebene **EE1** und der Einfallsebene **EE2** = Winkel der Transmissionsrichtung des polarisierenden Strahlteilers **PST** bezüglich der Einfallsebene **EE2** an der Materialprobe **MP** und |
| $\beta$ = | Azimut der Transmissionsrichtung des analysierenden Polarisators **APS** bezüglich der Einfallsebene **EE2** der Materialprobe **MP.** |

Weiterhin gilt:

$$tg\Psi = \sqrt{R_p / R_s}$$

Die Reflexion **R,** die Phasendifferenz $\Delta$ und das Amplitudenverhältnis tg $\Psi$ hängen von der Wellenzahl $\tilde{v}$ ab, die sich aus dem Kehrwert der Wellenlänge berechnet.

Das Azimut $\alpha_{St}$ der Transmissionsrichtung des polarisierenden Strahlteilers **PST** bezüglich seiner Einfallsebene **EE1** muss 45˚ betragen, wenn eine maximale Intensität im Interferogramm erhalten werden soll, d.h. keine Strahlung zur Strahlungsquelle **SQ** zurück reflektiert werden soll. Damit aber cos$\Delta$ gemessen werden kann, ist bezüglich der Einfallsebene **EE2** der Materialprobe ein Winkel von 22,5˚ optimal. Die Einstellung eines Winkels von 45˚ würde die Messung von cos$\Delta$ verhindern. Diese beiden Forderungen lassen sich gleichzeitig erfüllen, indem die Einfallsebene **EE1** des polarisierenden Strahlteilers **PST** und die Einfallsebene **EE2** der Materialprobe durch den Umlenkspiegel **US2** um 22,5˚ gegeneinander geneigt werden. Hierbei handelt es sich um den optimalen Wert. Ungerade Vielfache davon und von 22,5˚ geringfügig abweichende Winkel können ebenfalls eingestellt werden.

Die eckigen Klammern in der oben angegebenen Formel enthalten die Amplituden der cos- und sin-Anteile des Interferogramms, aus denen dann das Amplitudenverhältnis tg $\Psi$ und die Phasendifferenz $\Delta$ berechnet werden. Das Interferogramm i(d) wird einer cos -Fouriertransformation und einer sin-Fouriertransformation für jeden der Winkel $\beta$ (0˚, 45˚, 90˚, 135˚) der Transmissionsrichtung des analysierenden Polarisators **APS** bezüglich der Einfallsebene **EE2** der Materialprobe **MP** unterzogen, sodass die Inhalte der eckigen Klammern als Ergebnis für den jeweiligen Winkel folgen. Mit der cos- und sin-Fourier-Transformation ergeben sich für jeden Winkel $\beta$ zwei Resultate. Das Amplitudenverhältnis tg $\Psi$ ergibt sich aus der cos -Fouriertransformation $\beta$ für 0˚ und 90˚ ($R_p$.und $R_s$). Der cos $\Delta$ ergibt sich aus der cos - Fouriertransformation $\beta$ für 45˚ und 135˚, besser noch aus der Differenz von 45˚ und 135˚. Der sin $\Delta$ ergibt sich aus der sin -Fouriertransformation $\beta$ für 45˚ und 135˚˚, besser noch aus der Differenz von 45˚ und 135˚. Die Geräteeigenschaften des spektralen Infrarot-Ellipsometers **SIE** werden durch eine Eichmessung ohne Probe erfasst und bei der Auswertung berücksichtigt.

Im zuvor genannten Ausführungsbeispiel werden die Messungen für vier gemessene Einstellwinkel des analysierenden Polarisators **APS** von $\beta$ = 0˚, 45˚, 90˚ und 135˚ (vier Drehbewegungen des analysierenden Polarisators

APS) ausgewertet, um die ellipsometrischen Parameter $\Psi$ und $\Delta$ zu berechnen. Dabei werden zur Berechnung von $\Delta$ nur die Winkel $\beta = 45°$ und $135°$, d.h. $\pm 45°$, benötigt. Es gibt aber die Möglichkeit, auch $\Psi$ nur aus den Winkeln $\beta = 45°$ und $135°$, d.h. $\pm 45°$, zu berechnen. Damit sind zur Ermittlung von $\Psi$ und $\Delta$ nur noch zwei, statt bislang vier Messungen erforderlich. Der analysierende Polarisator **APS** muss nur noch zwischen den Positionen +45° und -45° hin und her bewegt werden.

Selbst diese Schwenkbewegung kann noch entfallen, wenn der analysierende Polarisator **APS** sowohl in der Transmissionsrichtung (+45°) als auch in der Reflexionsrichtung (-45°) der Materialprobe **MP** zur Messung eingesetzt wird. Damit ist die Polarisationsrichtung im reflektierten Anteil des Terastrahls **TS5** (-45°) um 90° gegenüber dem transmittierten Anteil des Terastrahls **TS5** (+45°) gedreht. Der reflektierte und transmittierte Anteil des Terastrahls **TS5** werden jeweils auf einen separaten Detektor **DE** geleitet und gemessen. Es ist in dieser Anordnung, bei der der analysierende Polarisator **APS** ortsfest unter 45° (oder ungeraden Vielfachen davon) zum einfallenden Terastrahl **TS5** angeordnet ist, nur noch ein Interferometer-Scan, der aus mehreren Einzelscans bestehen kann, erforderlich (eine Messung). Diese Variante ergibt einen Messzeitvorteil vom Faktor vier und minimiert den Einfluss von zeitlichen Veränderungen im optischen Weg der Ellipsometeranordnung **ELA.** Die polarisierende Interferometeranordnung **MPI** bildet mit der Materialprobe **MP** (oder zu Eichzwecken auch ohne Materialprobe **MP)** und dem analysierende Polarisator **APS** in zweifacher Funktion eine ellipsometrische Messeinheit.

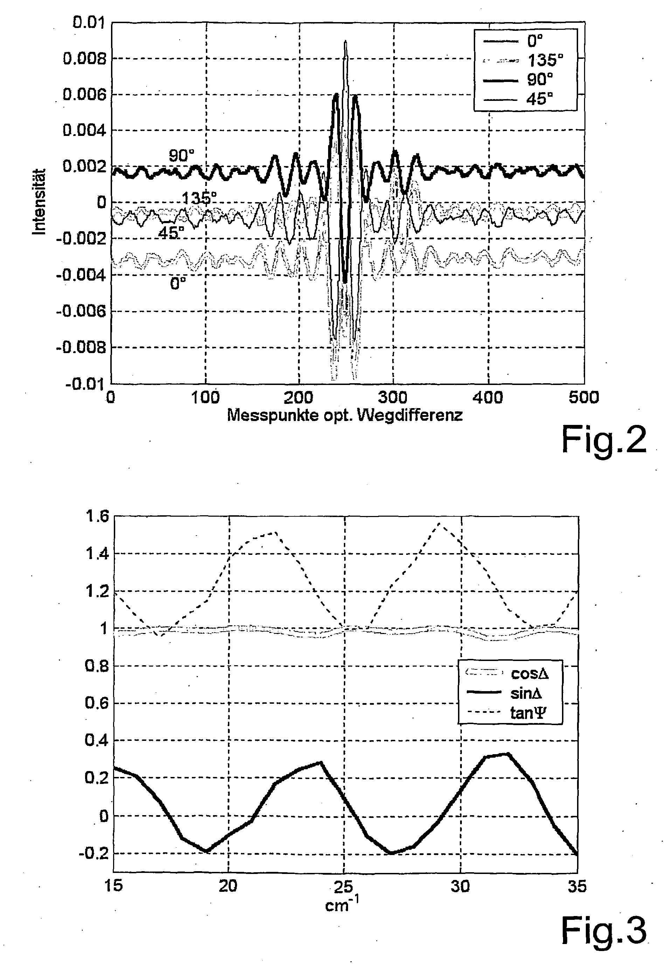

In der **Figur 2** sind in einem Diagramm der Intensität über Messpunkte für die optische Wegdifferenz (= Gangunterschied der Terastrahlen **TS2, TS3** im Terastrahl **TS4)** vier Interferogramme aufgezeigt, die mit dem analysierenden Polarisator **APS** an einer Materialprobe **MP** in Form einer Polyethylen-Folie von nominell 0,05 cm Dicke gemessen wurden. Aus Platzgründen wurden die Interferogramme in Transmission unter einem Einfallswinkel von 65° erstellt.

Die **Figur 3** zeigt die aus den Interferogrammen errechneten Spektren von sin/cos $\Delta$ und tg$\Psi$.

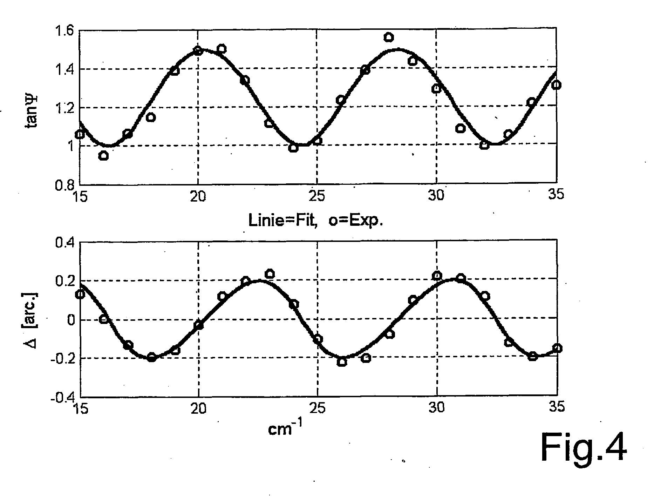

In der **Figur 4** sind die tg $\Psi$- und $\Delta$-Spektren als Messpunkte und die gefitteten Spektren für den Polyethylenfilm als Linie dargestellt. Die Messergebnisse ergeben eine Foliendicke von 0,054 cm, einen Brechungsindex von 1,46 und einen Absorptionsindex von 0.

**Bezugszeichenliste**

| | |
|---|---|
| **APS** | analysierender Polarisator |
| **AWE** | Auswerteeinheit |
| **DE** | Detektor |
| **DKS1** | ortsfester Dachkantspiegel |
| **DKS2** | ortsveränderlicher Dachkantspiegel |
| **EE** | Lichteinfallsebene |
| **ELA** | Ellipsometeranordnung |
| **GG** | Gleichausgang |
| **LPS** | linearer Polarisator |
| **MP** | Materialprobe |
| **MPI** | polarisierende Interferometeranordnung |
| **PST** | polarisierender Strahlteiler |
| **RA** | Reflexionsanordnung |
| **SIE** | spektrales retarderfreies Infrarot-Ellipsometer |
| **SP** | Spiegel |
| **SQ** | Strahlungsquelle |
| **TS** | Terastrahl/Infrarotstrahl |
| **US** | Umlenkspiegel |
| **WG** | Wechselausgang |
| $\alpha$ | Azimut zwischen den beiden Einfallsebenen EE1, EE2 |
| $\Delta$ | Phasendifferenz |
| **tg** $\Psi$ | Amplitudenverhältnis |

**Patentansprüche**

1.   Spektrales retarderfreies Infrarot-Ellipsometer zur Bestimmung der optischen Parameter einer Materialprobe im Infrarotbereich mit einer Strahlungsquelle, einem Detektor und einer Auswerteeinheit sowie mit einer polarisierenden Interferometeranordnung aus einem polarisierenden Strahlteiler und einem ortsfesten und einem ortsveränderlichen Spiegel vor der Materialprobe, wobei die Interferometeranordnung einen Wechselausgang mit einer Weiterleitung der Infrarotstrahlen und einen Gleichausgang mit einer Rücklenkung der Infrarotstrahlen zur Strahlungsquelle aufweist, und einer Ellipsometeranordnung mit einem linearen Polarisator vor der Materialprobe und einem analysierenden Polarisator hinter der Materialprobe, wobei vom einfallenden und reflektierten Infrarotstrahl am polarisierenden Strahlteiler eine erste Einfallsebene und an der Materialprobe eine zweite Einfallsebene definiert sind, und wobei die Spiegel (SP1, SP2) in der Interferometeranordnung (MPI) als Dachkantspiegel (DKS1, DKS2) mit einer geraden Anzahl von Reflexionen ausgebildet sind und dass die Materialprobe (MP), der analysierende Polarisator (APS) und der Detektor (DE) hinter dem Wechselausgang (WG) der Interferometeranordnung (MPI) angeordnet sind, **dadurch gekennzeichnet, dass**

• der polarisierende Strahlteiler (PST) in der Interferometeranordnung (MPI) gleichzeitig als linearer Polarisator (LPS) in der Ellipsometeranordnung (ELA) ausgebildet ist,
• die erste Einfallsebene, Einfallsebene (EE1) der Interferometeranordnung (MPI), und die zweite Einfallsebene, die Einfallsebene (EE2) der Ellipsometeranordnung (ELA), unter einem Azimut $\alpha$ in einem Bereich von 22,5° als optimalem Winkel oder des (2n+1)fachen des Azimuts $\alpha$ mit n= 1, 2, 3... zueinander angeordnet sind und dass
• die optischen Parameter in der Auswerteeinheit (AWE) aus der Cosinus- und Sinus-Transformierten der erstellten Interferogramme direkt ermittelt werden.

**2.** Spektrales retarderfreies Infrarot-Ellipsometer nach Anspruch 1,
**dadurch gekennzeichnet, dass**
der analysierende Polarisator (APS) ortsfest unter 45° oder einem ungeraden Vielfachen davon zum einfallenden Infrarotstrahl (TS5) angeordnet ist und sowohl in der Transmissionsrichtung als auch in der Reflexionsrichtung der Materialprobe (MP) zur Messung eingesetzt wird, wobei sowohl für den transmittierten als auch für den reflektierten Anteil des Infrarotstrahls (TS5) jeweils ein Detektor (DE) vorgesehen ist.

## Claims

**1.** A spectral, retarder-less infrared ellipsometer for determining the optical parameters of a material sample in the infrared range, having a radiation source, a detector and an analysis unit together with a polarising interferometer arrangement comprising a polarising beam splitter and a stationary and a mobile mirror upstream of the material sample, the interferometer arrangement comprising an a.c. output with onward transmission of infrared radiation and a d.c. output with return of the infrared radiation to the radiation source, and an ellipsometer arrangement with a linear polariser upstream of the material sample and an analysing polariser downstream of the material sample, a first plane of incidence being defined on the polarising beam splitter and a second plane of incidence being defined on the material sample by incident and reflected infrared radiation, and the mirrors (SP1, SP2) in the interferometer arrangement (MPI) taking the form of a roof mirror (DKS1, DKS2) with an even number of reflections and the material sample (MP), the analysing polariser (APS) and the detector (DE) being arranged downstream of the a.c. output (WG) of the interferometer arrangement (MPI),
**characterised in that**

• the polarising beam splitter (PST) in the interferometer arrangement (MPI) simultaneously takes the form of a linear polariser (LPS) in the ellipsometer arrangement (ELA),
• the first plane of incidence, plane of incidence (EE1) of the interferometer arrangement (MPI), and the second plane of incidence, plane of incidence (EE2) of the ellipsometer arrangement (ELA), are arranged at an azimuth $\alpha$ to one another in the region of 22.5° as optimum angle or of (2n+1) times the azimuth $\alpha$, with n = 1, 2, 3 etc. and **in that**
• the optical parameters in the analysis unit (AWE) are directly determined from the cosine and sine transforms of the interferograms generated.

**2.** A spectral, redarder-less infrared ellipsometer according to claim 1, **characterised in that** the analysing polariser (APS) is arranged stationarily at 45° or an odd multiple thereof relative to the incident infrared radiation (TS5) and is used for measurement both in the transmission direction and in the reflection direction of the material sample (MP), a detector (DE) being provided in each case both for the transmitted and for the reflected portions of the infrared radiation (TS5).

**EP 1 893 977 B1**

## Revendications

1. Ellipsomètre spectroscopique infrarouge sans retardateur pour déterminer les paramètres optiques d'un échantillon de matière dans le domaine infrarouge à l'aide d'une source de rayonnement, d'un détecteur et d'une unité d'exploitation ainsi que d'un dispositif interférométrique à polarisation formé d'un diviseur de faisceau polarisé et d'un miroir fixe ainsi que d'un miroir mobile devant l'échantillon de matière, le dispositif interférométrique ayant une sortie alternée avec transmission des rayons infrarouges et une sortie continue avec renvoi des rayons infrarouges vers la source de rayonnement et un dispositif ellipsométrique comprenant un polarisateur linéaire devant l'échantillon de matériau et un polarisateur d'analyse derrière l'échantillon de matériau, le rayon infrarouge incident et réfléchi définissant un premier plan incident sur le diviseur de faisceau polarisant et un second plan incident sur l'échantillon de matière, et

les miroirs (SP1, SP2) du dispositif interférométrique (MPI) étant des miroirs en dièdre (DKS1, DKS2) avec un nombre paire de réflexions, et l'échantillon de matière (MP), le polarisateur d'analyse (APS) et le détecteur (DE) sont installés derrière la sortie alternée (WG) du dispositif interférométrique (MPI),

   **caractérisé en ce que**

   - le diviseur de faisceau à polarisation (PST) est réalisé dans le dispositif interférométrique (MPI) en même temps comme polarisateur linéaire (LPS) dans le dispositif ellipsométrique (ELA),
   - le premier plan d'incidence, le plan d'incidence (EE1) du dispositif interférométrique (MPI) et le second plan d'incidence, le plan d'incidence (EE2) du dispositif ellipsométrique (ELA) étant disposés l'un par rapport à l'autre suivant un azimut $\alpha$ dans une zone de 22,5˚ comme angle optimum ou du multiple (2n+1) fois de l'azimut $\alpha$ avec n=1, 2, 3, et
   - les paramètres optiques se déterminent dans l'unité d'exploitation (AWE) directement à partir de la transformée en sinus et en cosinus des interférogrammes obtenus.

2. Ellipsomètre spectroscopique infrarouge sans retardateur selon la revendication 1,
   **caractérisé en ce que**
   le polarisateur d'analyse (APS) est installé de manière fixe à 45˚ ou d'un multiple impaire de cet angle par rapport au faisceau infrarouge incident (TS5) et il est utilisé pour la mesure à la fois dans la direction de transmission et dans la direction de réflexion de l'échantillon de matière (MP), et un détecteur (DE) respectif est prévu à la fois pour la partie transmise et la partie réfléchie du rayon infrarouge (TS5).

Fig.1

Fig.2

Fig.3

Fig.4

EP 1 893 977 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **M.J. DIGNAM ; M.D. BAKER.** Analysis of a Polarizing Michelson Interferometer for Dual Beam Fourier Infrared, Circular Dichroism Infrared, and Reflectance Ellipsometric Infrared Spectroscopies. *Appl. Spectroscopy,* 1981, vol. 35 (2), 186-193